# EUROPEAN PATENT SPECIFICATION

(11) **EP 2 346 595 B1**
(45) Date of publication and mention of the grant of the patent: **05.12.2012**
(21) Application number: 09817304.0
(22) Date of filing: 05.10.2009
(51) Int. Cl.: B01D 63/02, B01D 63/04, C02F 1/44

(54) **CAPILLARY MEMBRANE FILTRATION MODULE**
KAPILLARMEMBRAN-FILTERMODUL
MODULE DE FILTRATION À MEMBRANE CAPILLAIRE

(30) Priority: 03.10.2008 EP 08165837
(43) Date of publication of application: 27.07.2011
(73) Proprietor: Vlaamse Instelling voor Technologisch Onderzoek (VITO), 2400 Mol (BE)
(72) Inventor: DOYEN, Wim, B-2160 Wommelgem (BE); MOLENBERGHS, Bart, B-2400 Mol (BE); MELIN, Thomas, NL-6291 Vaals (NL)
(74) Representative: pronovem
(86) International application number: PCT/EP2009/062891
(87) International publication number: WO 2010/037868

(56) References cited:
- EP-A- 1 911 509
- WO-A-2008/001730
- WO-A-2008/012221
- JP-A- 10 146 520
- JP-A- 11 319 505
- JP-A- 62 144 708
- US-A- 3 704 223
- US-A1- 2005 115 899

## Description

The present invention is related to outside-in capillary membrane filtration modules for water treatment or the treatment of other turbid liquids.

Capillary membrane filtration modules are generally used for water treatment. Typically, such filtration modules are submerged in a raw liquid (e.g. waste water) to be treated and an outside-in (outside to inside) filtration direction is established by applying a transmembrane differential pressure to the hollow capillaries. A lower pressure is imposed at the inside (or lumen) of the capillary membranes.

By so doing, a permeate is obtained in the lumen of the capillaries, while the waste water de-waters, leaving sludge sticking to the outside of the capillaries. Further efficient withdrawal of filtered water from newly supplied waste water then becomes hindered. A solution to removing the dirt accumulated at the outer surface of the capillaries is by air scrub (through the introduction of air bubbles at the outer surface of the capillaries) and/or back wash and/or back pulse.

Said air bubbles are used additionally as a means for circulating the waste water over the capillary membranes, thereby also keeping the dirt in the waste water uniformly mixed, so as to optimize filtration efficiency. Rising air bubbles carry along the raw liquid, hence generating a forced flow of said raw liquid (sludge). As a result a satisfactory distribution of raw liquid over the entire module is achieved.

An efficient use of air bubbles requires the air bubbles to have optimal access to the capillary membranes. Patent application WO 2008/012221 discloses a capillary membrane filtration module comprising a plurality of vertically oriented planar membrane assemblies (or capillary membrane curtains), being linked to a common collector header at the bottom side. Each planar assembly of membranes is linked to an individual top header. Such a vertical capillary membrane module allows for better circulation of air bubbles and waste water in between the capillary membranes and less susceptibility to the entrapment of dirt, hence leading to efficient cleaning of the capillary membranes by air scrub.

However, in such vertical configurations, wherein the capillary membranes are fixated at both their ends (e.g. by a bottom and a top header), and wherein air bubbling is used, the flow velocity of the sludge/air mixture, especially at the top side, can be very high. As a consequence, necessary turbulence occurring at those locations may be so extensive, leading to disadvantageous early material fatigue and hence a limited material lifetime.

Reducing the flow velocity by increasing the interspacing between adjacent membrane assemblies is not desirable, since this would decrease the specific membrane area per unit of volume, leading to very large modules.

Japanese application publication 10146520 discloses an apparatus comprising screens formed of a large number of hollow fibre membranes which are held at both ends in collection pipes. The hollow fibres are arranged parallel to the raw water flow and the screens are so arranged that at both ends of the hollow fibres, the collection pipes of neighbouring screens are arranged at different positions in the raw water flowing direction. By so doing, the membrane filling ratio of hollow fibre membranes is increased and clogging of suspended matter to the membranes can be reduced.

A first drawback of this configuration is that the screens are formed of a plurality of rows of hollow fibre membranes, such that clogging within the screens can still occur. Furthermore, coalescence of air bubbles at the entrance of the passage between neighbouring screens can occur, leading to blocking of that passage and preventing flow of raw water through that passage.

Therefore, a solution is needed in the art in order to overcome the above drawbacks.

US 3704223 discloses membrane capillary countercurrent exchangers operable for dialysis liquid treatment. Figures 30-34 of that document disclose the construction of a plurality of single layers of capillaries combined into a bundle. The capillaries are open-ended at both ends and terminate in end plates which can be convex at one or both ends.

WO 2008/001730 discloses a filtration apparatus in which hollow fibers are immersed in a raw liquid to be treated which contains a suspended ingredient to cause the raw liquid to undergo solid/liquid separation and a treated liquid to permeate. It comprises hollow fibers which have been folded in two and a holding member which holds the folded parts of the hollow fibers while leaving a space. The hollow fibers held by the holding member are at least partly spaced from the holding member and/or the hollow fibers are at least partly spaced from one another. The holding member can be a rectangular rod and the vertical heights of rods of adjacent rows of folded fibres are alternately changed to dispose the rods zigzag.

The present invention aims to provide an improved capillary membrane filtration module that overcomes drawbacks of prior art devices (modules).

It is an aim of the present invention to reduce turbulence at locations where the capillary membranes are linked to the top header.

It is an aim of the present invention to increase the lifetime and/or to reduce material fatigue of the capillary membranes in a filtration module.

Aims of the invention are met by providing a device for the filtration of liquids as set out in the appended claims.

According to a first aspect of the invention, there is provided a device for the filtration of liquids. The device comprises a plurality of membrane curtains, each curtain being formed of a singular row of capillary membranes. The device further comprises at least one bottom header provided at a lower end of the membrane curtains (lower end of the capillary membranes) and linked to the capillary membranes of at least one membrane curtain. The device further comprises an individual top header for each membrane curtain. The top header is provided at an upper end of the membrane curtain and is linked to the capillary membranes thereof.

The membrane curtains (and hence the capillary membranes) are provided so as to be arranged in a vertical configuration when in use. The top headers are arranged spaced apart. Thereby, the membrane curtains and the top headers are arranged to allow an upward flow of (raw) liquid and possibly air bubbles between the membrane curtains and between the top headers.

The top headers are spaced apart, so that apertures are provided there in between for the (raw) liquid and possibly the air bubbles to exit vertically from between the membrane curtains.

According to the first aspect of the invention, top headers of at least two adjacent membrane curtains are arranged at different heights and capillary membranes of said adjacent membrane curtains have different lengths.

The lower ends of said adjacent membrane curtains are arranged at a same height. Hence, the bottom headers of said adjacent membrane curtains are arranged at a same height.

Preferably, the top headers of each two adjacent membrane curtains are arranged at different heights. Top headers are preferably arranged at two different heights.

Of two adjacent membrane curtains arranged at different heights, the uppermost point of the lower top header (or the upper side thereof) is located below the lowermost point of the upper top header (or the underside thereof) in a (orthogonal) projection on the gravity line. Preferably, in the projection on the gravity line, said uppermost point is located between 5 mm and 100 mm below said lowermost point, even more preferably between 10 mm and 100 mm below and most preferably between 20 mm and 100 mm below.

Preferably, the top headers are arranged in a staggered fashion in the direction of the gravity line. The top headers are hence preferably alternatingly arranged at two or more different heights.

Preferably, the bottom header is linked to the capillary membranes of a plurality of adjacent membrane curtains.

Preferably, the bottom header is configured to collect and remove permeate.

Preferably, the bottom header is formed of a single collector chamber.

Preferably, the top headers are configured to collect and remove permeate.

Preferably, at least one top header is so shaped as to be of larger thickness where it is linked to a capillary membrane compared to locations where it bridges capillary membranes.

Preferably, at least one top header comprises a corrugated sidewall. More preferably, each of the lateral sidewalls is corrugated. The corrugation is provided for increasing even more the area of flow of waste water between top headers. More preferably, at least one side wall of the top header is so corrugated that grooves and ridges run parallel to the capillary membranes. The ridges are preferably located in correspondence of capillary membranes. The grooves are preferably located interposed between capillary membranes.

Preferably, an elastomeric material is provided around each capillary membrane at locations where the capillary membrane is linked to the top header and/or to the bottom header. The elastomeric material is provided for damping vibrations and/or oscillations of the capillary membrane.

Preferably, devices of the invention comprise aerating means in between membrane curtains.

Preferably, the capillary membranes are outside-in nano-, micro- or ultra-filtration membranes.

Preferably, devices according to the invention comprise between 2 and 50, more preferably between 2 and 20 and most preferably between 3 and 8 membrane curtains.

According to a second aspect of the invention, there is provided a use or application of devices according to the present invention in submerged filtration applications, in particular membrane bioreactors (MBR).

According to a third aspect of the invention, there is provided a device for the filtration of liquids. The device comprises a plurality of membrane curtains, each curtain being formed of a singular row of capillary membranes. The device further comprises at least one bottom header provided at a lower end of the membrane curtains (lower end of the capillary membranes) and linked to the capillary membranes of at least one membrane curtain. The device further comprises an individual top header for each membrane curtain. The top header is provided at an upper end of the membrane curtain and is linked to the capillary membranes thereof.

The membrane curtains (and hence the capillary membranes) are provided so as to be arranged in a vertical configuration when in use. The top headers are arranged spaced apart. Thereby, the membrane curtains and the top headers are arranged to allow an upward flow of (raw) liquid and possibly air bubbles between the membrane curtains and between the top headers.

The top headers are spaced apart, so that apertures are provided there in between for the (raw) liquid and possibly the air bubbles to exit vertically from between the membrane curtains.

According to the third aspect of the invention, at least one top header is so shaped as to be of larger thickness where it is linked to a capillary membrane compared to locations where it bridges capillary membranes (i.e. locations intermediate adjacent capillary membranes).

Preferably, at least one top header comprises a corrugated sidewall. More preferably, each of the lateral sidewalls is corrugated. The corrugation is provided for increasing the size of the passage for the flow of raw liquid and possibly air bubbles between top headers. More preferably, at least one side wall of the top header is so corrugated that grooves and ridges run parallel to the capillary membranes. The ridges are preferably located in correspondence of capillary membranes. The grooves are preferably located interposed between capillary membranes.

The lower ends of adjacent membrane curtains are arranged at a same height. Hence, the bottom header(s) of said adjacent membrane curtains are arranged at a same height.

Preferably, the bottom header is linked to the capillary membranes of a plurality of adjacent membrane curtains.

Preferably, the bottom header is configured to collect and remove permeate.

Preferably, the bottom header is formed of a single collector chamber.

Preferably, an elastomeric material is provided around each capillary membrane at locations where the capillary membrane is linked to the top header and/or to the bottom header. The elastomeric material is provided for damping vibrations and/or oscillations of the capillary membrane.

### Brief Description of the Drawings

Figure 1 shows a side view of a filtration device according to the first aspect of the present invention. Figure 2 shows a front view of the same device.

Figure 3 represents a filtration module of the prior art. Figure 3A represents a side view of the upper part of the filtration module, showing top headers and membrane curtains. Figure 3B represents a top cross sectional view A-A of the filtration module of figure 3A.

Figure 4 represents a filtration module according to the first aspect of the present invention.

Figure 4A represents a side view of the upper part of the filtration module, showing top headers and membrane curtains. Figure 4B represents a top cross sectional view B-B of the filtration module of figure 4A.

Figure 5 represents a filtration module not forming part of the present invention and for illustrative purpose only. Figure 5A represents a side view of the upper part of the filtration module, wherein the side walls of the upper headers have a corrugated (waved) shape and wherein top headers and membrane curtains (running perpendicular to the drawing plane) are shown. Figure 5B represents a top cross sectional view C-C of the filtration module of figure 5A.

### Detailed Description of the Invention

Embodiments of the present invention will now be described in detail with reference to the attached figures, the invention is not limited thereto but only by the claims. The drawings described are only schematic and are non-limiting. In the drawings, the size of some of the elements may be exaggerated and not drawn on scale for illustrative purposes. The dimensions and the relative dimensions do not necessarily correspond to actual reductions to practice of the invention. Those skilled in the art can recognize numerous variations and modifications of this invention that are encompassed by its scope. Accordingly, the description of preferred embodiments should not be deemed to limit the scope of the present invention.

Moreover, the terms top, bottom, left, right, over, under and the like in the description and the claims are used for descriptive purposes and not necessarily for describing relative positions. The terms so used are interchangeable under appropriate circumstances and embodiments of the invention described herein can operate in other orientations than described or illustrated herein. For example, "left" and "right" of an element indicates being located at opposite sides of this element.

It is to be noticed that the term "comprising" should not be interpreted as being restricted to the means listed thereafter; it does not exclude other elements or steps. Thus, the scope of the expression "a device comprising means A and B" should not be limited to devices consisting only of components A and B. It means that with respect to the present invention, A and B are relevant components of the device.

Where numerical values are given with regard to limitations of a quantity, or the outcome of a measurement, for the assessment of those values, account shall be taken of variations due to impurities, methods used to determine measurements, human error, statistical variance, etc.

Where a range of numerical values is defined as extending between a lower limit and an upper limit, the range is to be construed as including said lower limit and said upper limit, unless otherwise noted.

Aspects of the invention are related to filtration devices (referred to as filtration modules hereinafter) comprising rows of capillary membranes (referred to as membrane curtains hereinafter), which, in use, are arranged in a standing (vertical) configuration and wherein the capillary membranes are fixated both at their lower and at their upper ends. Fixation of the capillary membranes is provided by linking their lower ends to a bottom header and their upper ends to a top header. Filtration modules of the invention are configured for use in submerged filtration, wherein the capillary membranes are completely submerged in the raw liquid.

The membrane curtains refer to singular planar assemblies of capillary membranes. Within the present invention, the expressions "planar membrane assembly", "membrane curtain" and "membrane plane" are used interchangeably and mean the adjacent positioning of capillary membranes in a same plane. Thus, the capillary membranes of a membrane curtain are ordered or stacked in a side by side arrangement, one behind the other, in a same plane and preferably at a (nonzero) distance from each other. A membrane curtain hence forms a singular row (or array) of capillary membranes. Such a curtain of capillary membranes is referred to as a membrane plane.

As implied by the term curtain, the capillary membranes in such filtration modules are arranged standing (or hanging from the headers) when in use. The capillary membranes and the curtains are thus generally arranged (substantially) parallel to the gravity line when in use. Such is also the case for the upper headers. However, the (upper) headers may form an angle with the gravity line. Consequently, the capillary membranes and the curtains may hang substantially vertically, which refers to the capillary membranes forming an angle with the gravity line preferably falling in the range between about 0° and about 10° in absolute value, more preferably between about 0° and about 5° in absolute value. It is however to be noted that the capillary membranes may be slightly curved between the upper and lower headers (i.e. between upper and lower fixation locations), because of an absence of tensioning.

The number of membranes in a same membrane curtain may vary from only a tenfold to more than thousand. The number of membrane curtains can range between 50 and 500 per metre, depending on the outer diameter of the capillaries.

In general, the free space between capillary membranes within a same membrane curtain, in combination with the space between successive membrane curtains determine the packing density. In order to guarantee efficient sludge (water) treatment, the packing density of a module should be optimal irrespective of the packing configuration. Capillary membrane filtration modules feature a high specific membrane area per unit of volume; a typical value for such modules is 500 m² in a volume of 3.36 m³ (2.2 m height, 0.9 m width, and 1.7 m length), or about 150 m²/m³.

Filtration is carried out by imposing a lower pressure (e.g. a partial vacuum) at the side where permeate is collected, in particular the inner lumen of the capillary membranes.

Capillary membranes suitable for devices of the present invention may be so-called "outside-in" capillary membranes such as disclosed in WO 2006/053046. Suitable capillary membranes for use in devices of the present invention may be reinforced and/or supported by a backing layer of reinforcing material such as fibrous material. Such capillary membranes may be membranes allowing nano-, micro-, or ultra-filtration (of liquids, colloids, liquid-solid mixtures such as e.g. dissolved macromolecules, or suspensions such as e.g. bacteria comprising suspensions). They are preferably suitable for outside to inside filtration. However, the invention is not limited to the use of particular capillary membranes.

The outer diameter of suitable capillaries preferably falls in the range between and including 0.5 mm and 10.0 mm, more preferably between 1.0 mm and 8.0 mm, even more preferably between 2.0 mm and 5.0 mm including 2.0 mm, 2.1 mm, 2.2 mm, 2.3 mm, 2.4 mm, 2.5 mm, 2.6 mm, 2.7 mm, 2.8 mm, 2.9 mm, 3.0 mm, 3.1 mm, 3.2 mm, 3.3 mm, 3.4 mm, 3.5 mm, 3.6 mm, 3.7 mm, 3.8 mm, 3.9 mm, 4.0 mm, 4.1 mm, 4.2 mm, 4.3 mm, 4.4 mm, 4.5 mm, 4.6 mm, 4.7 mm, 4.8 mm, 4.9 mm and 5.0 mm.

Aspects of the invention are particularly related to filtration modules making use of air bubbles for membrane cleaning and/or for maintaining a flow of raw liquid (sludge). Therefore, filtration modules can comprise aeration means. Aeration means may be in the form of perforated disks or plates which may be placed underneath the filtration modules. Aeration means can alternatively be in the form of perforated air ducts which are advantageously provided in between the membrane curtains. The air bubbles travel upwards in between the membrane curtains and form an air/sludge mixture. The air/sludge mixture may encounter a flow resistance in exiting the module at the top end. In fact, top headers may act as flow path restrictors, as they have a larger thickness than the outer diameter of the capillary membranes, with as a consequence an increased flow velocity. The inventors observed that at such locations a too high turbulence can occur, which subjects the capillary membranes to intermittent and possibly high momentum forces. The capillary membranes are hence prone to undesired excessive vibrating and/or shaking. This can lead to early material fatigue of the capillary membranes close to the location where they are fixated in the top header.

In order to overcome this drawback, an improved design of a filtration module with capillary membranes is provided. Aspects of the invention are disclosed in the following embodiments with the aid of the accompanying drawings.

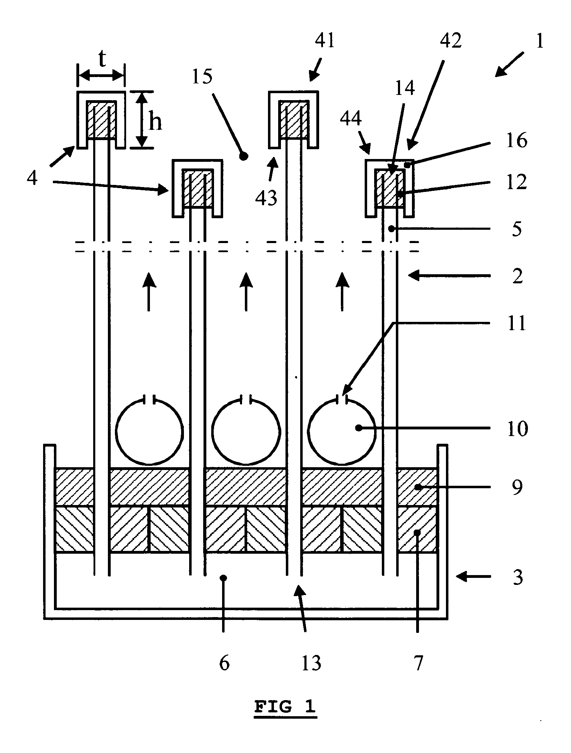

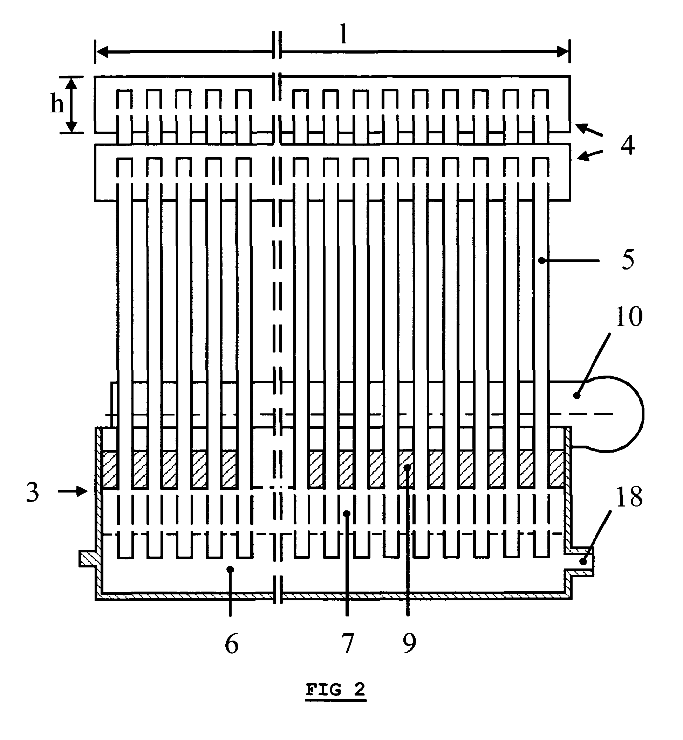

Filtration devices according to a first aspect of the invention will now be described with reference to figures 1 and 2, which show respectively a side view and a front view of a filtration module 1 according to the present invention. Capillary membranes 5 are hanging vertically and are potted at their lower ends in a (bottom) header 3. The bottom header 3 may be a single header for all the capillary membranes of the filtration module 1. Alternatively, a plurality of bottom headers may be provided.

The capillary membranes 5 are arranged in distinct membrane curtains 2. Each membrane curtain forms a planar layer. Figure 1 shows four such membrane curtains 2, positioned side by side. Figure 2 represents a front view of the module, showing two successive membrane curtains in front view. The capillary membranes in a membrane curtain are positioned one behind the other (or one next to the other, depending on the point of view), with successive capillary membranes spaced at a distance.

At the upper ends, the capillary membranes within a single membrane curtain 2 are potted in a top header 4. Each membrane curtain has its own, individual top header 4 for all capillary membranes of that curtain.

Either the bottom header(s) 3, or the top headers 4, or even both can act as collector for collecting and removing permeate. In the embodiment of figures 1 and 2, the bottom header is configured to act as a permeate collector. Hence, the lower ends 13 of the capillary membranes are open such that a liquid passage is provided out of capillary membranes 5 towards bottom header(s) 3. The filtered water (permeate) that is drawn through the membrane wall flows through the passage into a collector chamber 6. The bottom header 3 comprises an opening 18 for the collector chamber 6 - at one or two sides - to evacuate the permeate. At the location where capillary membranes 5 are entering the collector chamber 6, sealing is done by potting material 9, for instance a polyurethane, epoxy, poly butadiene resin or similar material.

Supports 7 may be provided in the bottom header for holding the capillary membranes together during production and for preventing potting resin entering the permeate collector 6 during the potting operation.

Generally, the capillary membranes' upper ends 14 are watertight sealed by potting material 12 as shown in figure 1, in which case no permeate or air is evacuated from the capillary membranes at the top headers. Alternatively, individual top headers 4 may be configured in a similar way as the bottom header(s) 3 in case the former act as permeate collector as well. They may then be configured for de-aerating the upper end of the capillary membranes by removal of any local air that may have accumulated during operation of the device and which can cause a local insufficient permeate transfer though the membranes.

In a still alternative embodiment, only the top headers 4 are configured for collecting and evacuating permeate and in the bottom header(s) 3, the capillary membranes are closed (no permeate is removed (or collected) at the bottom header).

The present invention thus contemplates modules wherein either the bottom header or the top header is so construed as to function as permeate collector, or both top and bottom headers act concomitantly as permeate collectors.

As each curtain of capillaries is linked to its own top header, flow passages 15 for the waste water are provided between the outer housings 16 of top headers of adjacent membrane curtains.

According to the present aspect of the invention, adjacent (successive) top headers 4, each one linked to an adjacent (successive) membrane curtain 2 are arranged at different heights. The term height refers to a measurement along the gravity line, from a same reference point to a same location on the top headers, e.g. the underside or the top side of a top header. In preferred embodiments, the height difference between two successive (adjacent) top headers is larger than the height h of a top header.

The terms adjacent and successive refer to directly following. Hence, adjacent or successive top headers refer to neighbouring top headers, which follow directly one another, without there being a third top header interposed in between.

The height h of a top header, as indicated in figures 1 and 2, refers to the vertical dimension of the top header (i.e. the dimension of the top header, measured along a gravity line and between the underside and the top side thereof). The thickness t of a top header, as indicated in figure 1, refers to the dimension of the top header measured along a horizontal line in the lateral plane (drawing plane of the side view as in figure 1). The length 1 of a top header, as indicated in figure 2, refers to the dimension of the top header measured along a horizontal line in the frontal plane (drawing plane of the front view as in figure 2).

An appropriate selection of the height difference between adjacent top headers can reduce turbulence. Let of two successive top headers, the highest arranged top header be referred to as the upper top header 41 and the other one be referred to as the lower top header 42. The lowermost point 43 of the upper top header 41 is preferably located between 5 mm and 100 mm higher than the highest point 44 of the lower top header 42, more preferably between 10 mm and 100 mm higher and most preferably between 20 mm and 100 mm higher. Said lowermost point can be located on the underside of the upper top header. Said highest point can be located on the upper side of the lower top header.

When measured between a same reference point and same locations on the top headers (assuming the top headers have an identical height h), the latter expression can be stated as: the height difference AH between two adjacent (successive) top headers falls preferably in the range between h + 5 mm and h + 100 mm, wherein h is defined as hereinabove. More preferably, said height difference ΔH falls in the range between h + 10 mm and h + 100 mm, with the range between h + 20 mm and h + 100 mm being most preferred. The magnitude of the height difference ΔH may be selected based on the thickness t of the top header (or the difference between t and the outer diameter of the capillary membranes). The thinner the top headers, the smaller the height difference ΔH may be.

Whereas figures 1 and 2 depict an example configuration with a staggered (zigzag) arrangement, alternative configurations, e.g. with staggering at three levels, are possible as well.

Embodiments in which lower top headers have a geometry different from the upper top headers can be contemplated as well, e.g. for maximizing the area of flow in passage 15.

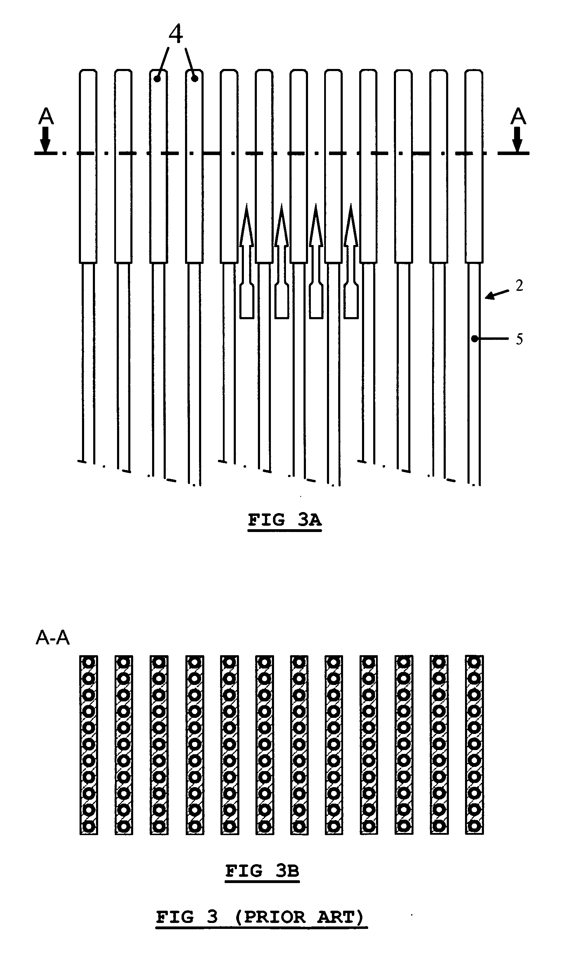

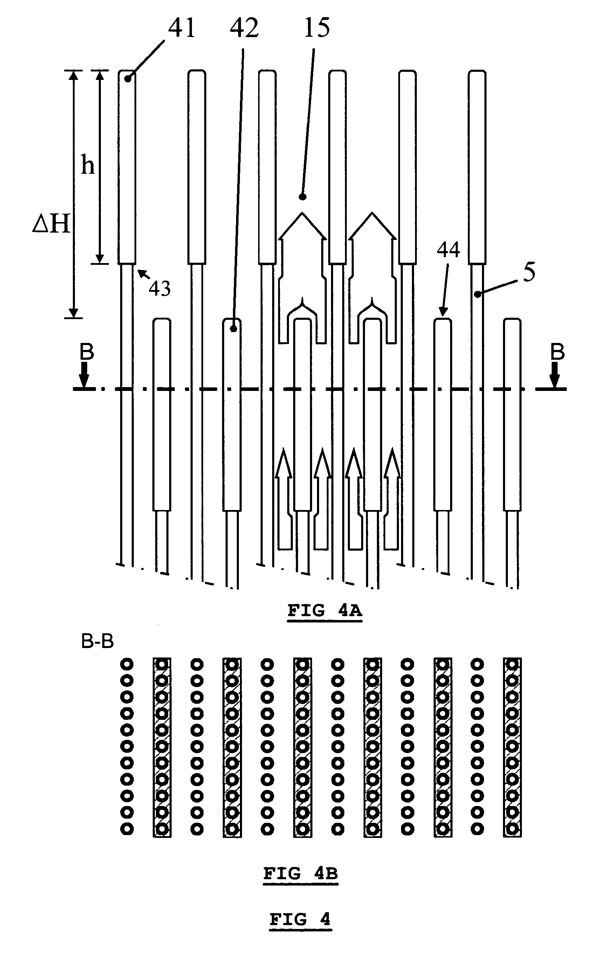

According to the above aspects of the present invention, the constriction of the flow path in the passage 15 is reduced, or at least part of the constriction is displaced and the overall constriction is thereby rendered less acute, by shifting some of the top headers in height. When the height difference ΔH between successive top headers is larger than the height h of the top header (i.e. the headers do not at all overlap in frontal view), the waste water flowing upwards experiences a constriction only from one side. This is illustrated in figures 3A and 4A by the arrows in between the membrane curtains 2. Figure 3A illustrates the situation occurring in prior art modules. Figure 4A illustrates the situation according to present aspects of the invention. As can be seen in figure 4A, the area of passage 15 of the waste water is enlarged while maintaining for the module a virtually same specific membrane area.

By consequence, turbulence is significantly reduced at the upper ends of the capillary membranes. In fact, the waste water and air bubbles flowing upwards, in between two adjacent curtains, do not experience a sudden constriction at the location of the top headers as in the prior art, as these are shifted in height. As a result, high intermittent momentum forces on the capillary membranes can be prevented and life-time of the capillary membranes can be extended.

According to the present aspect of the invention, as can be seen in figures 1 and 2, the capillary membranes of successive membrane curtains have moreover a different length (i.e. the distance between bottom and top header differs between successive membrane curtains).

Advantageously, this can be provided by arranging successive membrane curtains at a same height at their lower ends (where they are linked to the bottom header(s)), while maintaining an arrangement at different heights at the upper end (where they are linked to the top headers). The length difference between capillary membranes of successive membrane curtains in such cases hence results to be equal to the height difference ΔH as indicated above.

The different height arrangement at the top and the disposition of membranes in singular rows can ensure best contact conditions between membranes and raw liquid combined with a beneficial flow regime and an extended lifetime of the membranes.

Furthermore, the fact that successive membrane curtains have differing lengths does not significantly affect the membrane packing density, but nevertheless allows to arrange successive membrane curtains at a same height at the bottom. This reduces the complexity of the apparatus and eases assembly. Furthermore, it can allow a uniform inflow of raw liquid in the flow passages between the membrane curtains.

The arrangement of membrane curtains at a same height at the bottom can furthermore facilitate the integration of aeration means, such as air ducts 10, at the bottom between the membrane curtains. Air bubbles can be injected directly in the flow passage between the membrane curtains, which allows to distribute them uniformly in between the different curtains. As a result, coalescence of air bubbles at the entrance of a flow passage and resulting obstruction thereof can be prevented.

It is to be noticed that at the bottom, the raw liquid can enter the flow passages between the membrane curtains sideways, where, absent constrictions, clogging of the flow passage is even less likely to occur.

The top headers and/or the bottom header(s) can be kept in place by fastening to a frame.

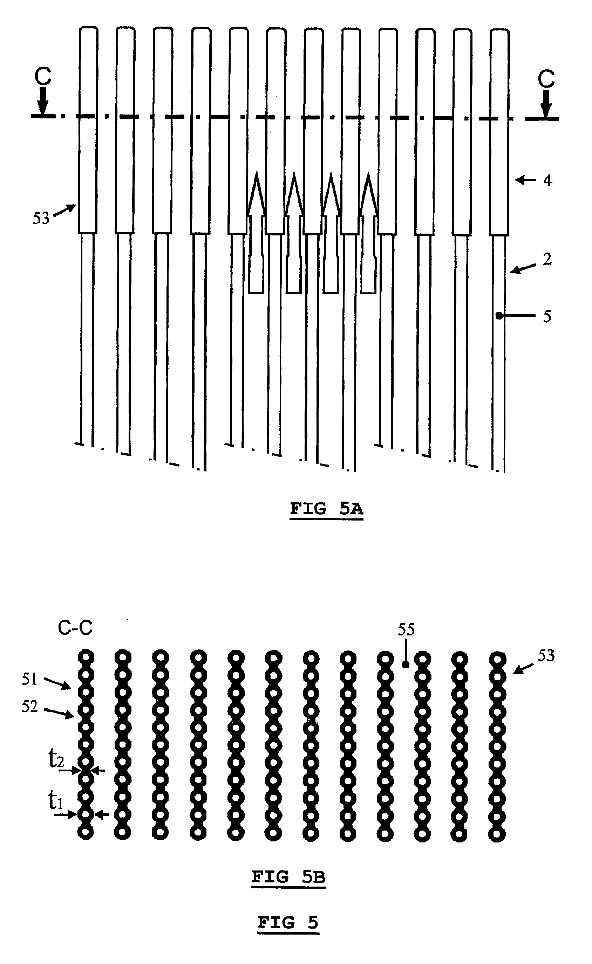

According to another aspect of the present invention, filtration devices are provided which comprise top headers having a particular design accommodating a larger passage for the flow of sludge/air mixture, such as the passage 55 shown in figure 5 which does not form part of the invention. According to the present aspect, at least one top header (of two successive top headers) is so shaped as to have a thickness t₁ at locations 51 where it is linked to a capillary membrane which is larger than the thickness t₂ at locations 52 bridging two adjacent capillary membranes (of a same membrane curtain). Such particular design may involve top headers having corrugated or waved side walls 53 between the capillary membranes as shown in figure 5. As a result, the area available for the flow of the air/sludge mixture in between successive headers and in a direction parallel to the capillaries is enlarged, while maintaining a same specific membrane area per unit volume.

In an alternative embodiment of the present aspect, top headers comprise grooves in the side walls at locations interposed between successive capillary membranes. Such grooves are oriented parallel to the capillary membranes. A same effect as in the embodiment of figure 5 is hereby obtained.

The advantage of top headers having corrugated or grooved side walls can easily be seen when comparing these with top headers having flat side walls. When a horizontal section is taken of the two, the sectional area of a top header with corrugated or grooved side wall will be significantly smaller, leaving hence more space for the passage of the air/sludge mixture.

The corrugated side wall(s) of the top header 53 has (have) preferably a sinusoidal shape. It can have other wave-like shapes, preferably so formed that it contours at least partially the capillary membranes. Preferably, the distance between the lower and upper apex (the valley and the tip) of such a side wall corresponds to half the external diameter of the capillary membrane.

Such a top header can be manufactured by bringing two corrugated sheets of a suitable material (preferably a plastic material) against each other, with their apices arranged at corresponding positions, such that the sheets form a mirror image of each other. In the apertures formed between the sheets, the capillary membranes can be arranged. The sheets can be made to adhere to each other and to the membranes by a suitable adhesive.

By way of example, for a membrane having an external diameter of 4 mm, corrugated sheets of 0.3 mm thickness can be used to form the top header. The top header will then have a thickness t₁ of about 4.6 mm at positions where the top header is linked to the membranes and a thickness t₂ of about 0.6 mm at intermediate positions. This significantly increases the size of the flow passage between successive top headers compared to top headers having flat side walls (i.e. of constant thickness t = 4.6 mm) .

Corrugated top headers can alternatively be moulded or cast around the capillary membranes.

A reinforcement member, such as a bar or rod can be provided on top of the top headers. The reinforcement member is linked to the top header at a multitude of points. It can allow for external fixation of the top header (e.g. to a frame). As a result, such reinforcement member provides additional rigidity to the header, while not interfering at all with the flow of raw liquid.

Top headers of the present aspect are preferably combined with an arrangement involving a bottom header linked to a plurality of membrane curtains.

Where the membrane curtains are arranged at a same height at the bottom, aeration devices can advantageously be integrated in between the membrane curtains and possibly in the bottom header(s). The integration of aeration devices in the bottom header or between the membrane curtains, allows injecting the air bubbles directly in the flow passage between the membrane curtains and hence to distribute them uniformly in between the different rows.

In the preferred case that the bottom header is formed of a single chamber for collecting permeate, the raw liquid enters the flow passages between the membrane curtains sideways, where, absent constrictions, clogging of the flow passage is less likely to occur.

The present aspect of the invention (design of the side walls of top headers) can be provided in addition to previous aspects. With a staggered arrangement of top headers as indicated hereinabove, at least the lower top headers are formed according to the present aspect of the invention.

According to a preferred embodiment of devices of the invention, a damping material, such as an elastomeric material is provided around the capillary membranes, at the location where they are potted in the top headers 4 and/or at the location where they are potted in the bottom header 3. The elastomeric material can subdue vibrations of the capillary membrane due to the circulating waste water and/or air bubbles. Hence, in addition to the particular top header positioning and/or top header design within modules according to the present invention, a further improvement in capillary material life-time is achieved by providing a damping material onto the capillaries. The damping material is preferably an elastomeric material. Suitable elastomeric materials may be silicone rubbers, or polyurethanes, such as for mouldmaking. Particularly suitable are two-component silicones, more preferably poly-condensation silicones such as e.g. ASSYST 181 (Assyst BVBA, Belgium). Preferably, the damping material (the elastomeric material) has, after curing, a Shore A hardness (Durometer) falling in the range between 10 and 40, more preferably between 15 and 25.

The damping material is preferably provided continuously, underneath the upper header (and/or above the bottom header), so as to interconnect locally the capillary membranes in a membrane curtain. Alternatively, the damping material can be provided around each capillary membrane separately.

The membrane curtains 2 within modules according to the present invention are advantageously arranged at a preferably fixed distance from each other (e.g. by mounting the bottom and top headers at a well defined distance from each other). Also the individual capillary membranes within a same curtain are preferably arranged with (substantially) equal interspacing one next to the other.

Individual capillary membranes are thus advantageously kept well apart from each other in a controllable way resulting in an excellent accessibility of the air bubbles and the waste water to the membranes without risk of entanglement.

An apparatus for filtrating raw liquids can comprise a plurality of filtration modules 1. These are typically arranged side by side in a tank wherein the raw liquid circulates when the apparatus is in use.

In a typical application such as membrane bioreactors (MBR), air bubbling is applied to keep the waste water (the "raw" liquid) moving around and in between the capillaries and to prevent that any solids or particles within the waste water sink to the bottom of the membrane bioreactor tank. This air is blown from below the modules and cleans the outer surface of the capillary membranes by scrubbing effect. Optionally, (additional) air can be supplied by blowing air through openings 11 of an air supply tube 10 placed between the planar layers 2 of capillaries just above the bottom header 3. An air supply tube can be provided between every planar layer 2 as shown on figure 1. Alternatively, air supply tubes 10 may be provided between only some of the curtains.

## Claims

1. A device for the filtration of liquids, comprising:
- a plurality of membrane curtains (2),
- a bottom header (3) provided at a lower end of the membrane curtains and linked to the capillary membranes of at least one membrane curtain,
- an individual top header (4) for each membrane curtain, the top header provided at an upper end of the membrane curtain and linked to the capillary membranes thereof,
wherein the membrane curtains (2) are arranged, in use, in a vertical configuration and the top headers (4) are spaced apart, thereby allowing an upward flow of liquid between the membrane curtains (2) and between the top headers (4), wherein top headers (41, 42) of at least two adjacent membrane curtains are arranged at different heights, and wherein of said two adjacent membrane curtains, the top headers of which being arranged at different heights, the uppermost point (44) of the lower top header (42) is located below the lowermost point (43) of the upper top header (41) in an orthogonal projection on the gravity line,
**characterised in that** each curtain is formed of a singular row of capillary membranes (5), and **in that** capillary membranes (5) of said adjacent membrane curtains (2) have different lengths and the lower ends of said adjacent membrane curtains (2) are arranged at a same height.

2. The device according to claim 1, wherein, in the projection on the gravity line, said uppermost point is located between 5 mm and 100 mm below said lowermost point, preferably between 10 mm and 100 mm below.

3. The device according to any one of the preceding claims, wherein the top headers are arranged in a staggered fashion in the direction of the gravity line.

4. The device according to any one of the preceding claims, wherein the top headers are arranged at two different heights (43, 44) alternatingly.

5. The device according to any one of the preceding claims, wherein the bottom header (3) is linked to the capillary membranes of at least two adjacent membrane curtains.

6. The device according to any one of the preceding claims, wherein the bottom header (3) is configured to collect and remove permeate.

7. The device according to any one of the preceding claims, wherein the bottom header (3) is formed of a single collector chamber.

8. The device according to any one of the preceding claims, wherein the top headers (4) are configured to collect and remove permeate.

9. The device according to any one of the preceding claims, wherein at least one top header is so shaped as to be of larger thickness (t₁) where it is linked to a capillary membrane compared to locations (t₂) where it bridges capillary membranes.

10. The device according to claim 9, wherein at least one side wall of the top header is so corrugated that grooves and ridges run parallel to the capillary membranes.

11. The device according to any one of the preceding claims, wherein an elastomeric material is provided around each capillary membrane at locations where the capillary membrane is linked to the top header for damping vibrations and/or oscillations of the capillary membrane.

12. The device according to any one of the preceding claims, comprising aerating means (10, 11) in between membrane curtains.

13. The device according to any one of the preceding claims, wherein the capillary membranes are outside-in nano-, micro- or ultra-filtration membranes.

14. Use of the device according to any one of the preceding claims in submerged filtration applications.

## Patentansprüche

1. Vorrichtung zum Filtrieren von Flüssigkeiten, umfassend:
- mehrere Membranvorhänge (2),
- einen unteren Aufnehmer (3), der an einem unteren Ende der Membranvorhänge angeordnet ist und mit den Kapillarmembranen mindestens eines Membranvorhangs verbunden ist,
- einen einzelnen oberen Aufnehmer (4) für jeden Membranvorhang, welcher an einem oberen Ende des Membranvorhangs angeordnet ist und mit dessen Kapillarmembranen verbunden ist,
wobei die Membranvorhänge (2) in Betrieb in vertikaler Konfiguration angeordnet sind und die oberen Aufnehmer (4) voneinander beanstandet sind, so dass zwischen den Membranvorhängen (2) und zwischen den oberen Aufnehmern (4) ein aufwärts gerichteter Flüssigkeitsstrom möglich ist,
wobei die oberen Aufnehmer (41, 42) von mindestens zwei benachbarten Membranvorhängen in unterschiedlichen Höhenstufen angeordnet sind
und wobei bei den besagten beiden benachbarten Membranvorhängen, deren obere Aufnehmer in unterschiedlichen Höhenstufen angeordnet sind, sich der höchstgelegene Punkt (44) des tiefer angeordneten oberen Aufnehmers (42) in orthogonaler Projektion auf die Wirklinie der Schwerkraft unterhalb des untersten Punkts (43) des höher angeordneten oberen Aufnehmers (41) befindet,
und **dadurch gekennzeichnet, dass** jeder Vorhang aus einer einzigen Reihe von Kapillarmembranen (5) ausgebildet ist und dass die Kapillarmembranen (5) der besagten benachbarten Membranvorhänge (2) von unterschiedlicher Länge sind und die unteren Enden der besagten benachbarten Membranvorhänge (2) in gleicher Höhe angeordnet sind.

2. Die Vorrichtung nach Anspruch 1, bei welcher in der Projektion auf die Wirklinie der Schwerkraft, der besagte höchstgelegene Punkt zwischen 5 mm und 100 mm tiefer, vorzugsweise zwischen 10 mm und 100 mm tiefer, als der besagte tiefstgelegene Punkt angeordnet ist.

3. Die Vorrichtung nach irgendeinem der vorhergehenden Ansprüche, wobei die oberen Aufnehmer in Richtung der Wirklinie der Schwerkraft versetzt angeordnet sind.

4. Die Vorrichtung nach irgendeinem der vorhergehenden Ansprüche, wobei die oberen Aufnehmer abwechselnd in zwei verschiedenen Höhenstufen (43, 44) angeordnet sind.

5. Die Vorrichtung nach irgendeinem der vorhergehenden Ansprüche, wobei der untere Aufnehmer (3) mit den Kapillarmembranen von mindestens zwei benachbarten Membranvorhängen verbunden ist.

6. Die Vorrichtung nach irgendeinem der vorhergehenden Ansprüche, wobei der untere Aufnehmer (3) konfiguriert ist, um Permeat aufzufangen und abzuführen.

7. Die Vorrichtung nach irgendeinem der vorhergehenden Ansprüche, wobei der untere Aufnehmer (3) als singuläre Kollektorkammer gebildet ist.

8. Die Vorrichtung nach irgendeinem der vorhergehenden Ansprüche, wobei die oberen Aufnehmer (4) konfiguriert sind, um Permeat aufzufangen und abzuführen.

9. Die Vorrichtung nach irgendeinem der vorhergehenden Ansprüche, wobei mindestens ein oberer Aufnehmer derart geformt ist, dass er an den Stellen der Verbindung mit einer Kapillarmembran von größerer Stärke (t₁) ist als an Stellen (t₂), an denen er Kapillarmembranen überbrückt.

10. Die Vorrichtung nach Anspruch 9, wobei mindestens eine Seitenwand des oberen Aufnehmers derart gewellt ist, dass die Eintiefungen und Erhebungen parallel zur den Kapillarmembranen verlaufen.

11. Die Vorrichtung nach irgendeinem der vorhergehenden Ansprüche, wobei um jede Kapillarmembran an Stellen, an denen die Kapillarmembran mit dem oberen Aufnehmer verbunden ist, zum Dämpfen von Vibrationen und/oder Schwingungen der Kapillarmembran ein elastomerisches Material angeordnet ist.

12. Die Vorrichtung nach irgendeinem der vorherigen Ansprüche, welche zwischen den Membranvorhängen Mittel zum Belüften (10, 11) beinhaltet.

13. Die Vorrichtung nach irgendeinem der vorhergehenden Ansprüche, wobei die Kapillarmembranen von außen nach innen wirkende Nano-, Mikro- oder Ultrafiltrationsmembranen sind.

14. Verwendung der Vorrichtung nach irgendeinem der vorhergehenden Ansprüche in Filteranwendungen unterhalb eines Flüssigkeitsspiegels.

## Revendications

1. Dispositif pour la filtration de liquides, comprenant :
- une pluralité de rideaux de membrane (2),
- un collecteur inférieur(3) disposé à une extrémité inférieure des rideaux de membrane et relié aux membranes capillaires d'au moins un rideau de membrane,
- un collecteur supérieur individuel (4) pour chaque rideau de membrane, le collecteur supérieur étant disposé à une extrémité supérieure du rideau de membrane et relié aux membranes capillaires de celui-ci,
dans lequel les rideaux de membrane (2) sont agencés, en condition d'utilisation, en une configuration verticale et les collecteurs supérieurs (4) sont espacés, permettant ainsi un écoulement vers le haut de liquide entre les rideaux de membrane (2) et entre les collecteurs supérieurs (4),
dans lequel les collecteurs supérieurs (41, 42) d'au moins deux rideaux de membrane adjacents sont agencés à des hauteurs différentes, et dans lequel, pour lesdits deux rideaux de membrane adjacents dont les collecteurs supérieurs sont agencés à des hauteurs différentes, le point le plus élevé (44) du collecteur supérieur plus bas (42) est situé en dessous du point le plus bas (43) du collecteur supérieur plus haut (41) dans une projection orthogonale sur la ligne de gravité,
**caractérisé en ce que** chaque rideau est formé d'une seule rangée de membranes capillaires (5) et **en ce que** les membranes capillaires (5) desdits rideaux de membrane adjacents (2) ont des longueurs différentes et les extrémités inférieures desdits rideaux de membrane adjacents (2) sont agencées à une même hauteur.

2. Le dispositif selon la revendication 1, dans lequel, dans la projection sur la ligne de gravité, ledit point le plus élevé est situé entre 5 mm et 100 mm en dessous dudit point le plus bas, de préférence entre 10 mm et 100 mm en dessous.

3. Le dispositif selon l'une quelconque des revendications précédentes, dans lequel les collecteurs supérieurs sont agencés d'une manière décalée dans la direction de la ligne de gravité.

4. Le dispositif selon l'une quelconque des revendications précédentes, dans lequel les collecteurs supérieurs sont agencés à deux hauteurs différentes (43, 44) en alternance.

5. Le dispositif selon l'une quelconque des revendications précédentes, dans lequel le collecteur inférieur (3) est relié aux membranes capillaires d'au moins deux rideaux de membrane adjacents.

6. Le dispositif selon l'une quelconque des revendications précédentes, dans lequel le collecteur inférieur (3) est configuré pour recueillir et éliminer le perméat.

7. Le dispositif selon l'une quelconque des revendications précédentes, dans lequel le collecteur inférieur (3) est formé par une chambre de collecteur unique.

8. Le dispositif selon l'une quelconque des revendications précédentes, dans lequel les collecteurs supérieurs (4) sont configurés pour recueillir et éliminer le perméat.

9. Le dispositif selon l'une quelconque des revendications précédentes, dans lequel au moins un collecteur supérieur est configuré de manière à être d'une plus grande épaisseur (t₁) là où il est relié à une membrane capillaire par rapport aux emplacements (t₂) où il relie des membranes capillaires.

10. Le dispositif selon la revendication 9, dans lequel au moins une paroi latérale du collecteur supérieur est ondulée de façon telle les rainures et les crêtes sont parallèles aux membranes capillaires.

11. Le dispositif selon l'une quelconque des revendications précédentes, dans lequel un matériau élastomère est disposé autour de chaque membrane capillaire aux endroits où la membrane capillaire est reliée au collecteur supérieur pour amortir les vibrations et/ou les oscillations de la membrane capillaire.

12. Le dispositif selon l'une quelconque des revendications précédentes, comprenant des moyens d'aération (10, 11) entre les rideaux de membrane.

13. Le dispositif selon l'une quelconque des revendications précédentes, dans lequel les membranes capillaires sont des membranes de nano-, micro- ou ultra-filtration à écoulement centripète.

14. Utilisation du dispositif selon l'une quelconque des revendications précédentes dans des applications de filtration submergées.
